# EUROPEAN PATENT SPECIFICATION

(11) **EP 3 582 610 B1**
(45) Date of publication and mention of the grant of the patent: **17.01.2024**
(21) Application number: 18707445.5
(22) Date of filing: 15.02.2018
(51) Int. Cl.: A01J 7/04

(54) **MILKING DEVICE FOR MILKING DAIRY ANIMALS WITH RINSING FUNCTION**
MELKVORRICHTUNG ZUM MELKEN VON MILCHTIEREN MIT SPÜLFUNKTION
DISPOSITIF DE TRAITE DESTINÉ À LA TRAITE D'ANIMAUX LAITIERS PRÉSENTANT UNE FONCTION DE RINÇAGE

(30) Priority: 17.02.2017 DE 202017000895 U
(43) Date of publication of application: 25.12.2019
(73) Proprietor: DeLaval Holding AB, 147 21 Tumba (SE)
(72) Inventor: WIEDEMANN, Martin, 147 21 Tumba (SE)
(74) Representative: Lilliehorn, Tobias
(86) International application number: PCT/SE2018/050148
(87) International publication number: WO 2018/151657

(56) References cited:
- EP-A2- 1 285 576
- WO-A1-2005/067702
- WO-A1-2008/140407
- WO-A1-2011/114138
- WO-A2-2011/102911
- US-A- 3 792 686
- US-A1- 2010 242 845

## Description

### Technical field

The present invention relates to a milking system configured to milk dairy animals, according to claim 1.

### Background

Such milking systems are known in the art. As an example, the document WO 2008/140407 A1 discloses such a milking system, in which a teat preparation station is provided. One purpose of this teat preparation station is to apply a cleaning substance onto a teat of the animal to be milked to prepare and disinfect it for subsequent milking. Moreover, according to said document, it may also be intended to remove, e.g. rinse off, the cleaning substance from the teat at the teat preparation station.

This solution has proven to already achieve a good cleaning of the teats. However, the application and removal of the cleaning substance at the teat preparation station is associated with a certain engineering effort leading to increased costs of the preparation station. In addition, this state of the art may require keeping the animal to be milked at the teat preparation station for a certain amount of time to ensure a sufficiently long time span for cleaning the teats, i.e. for sufficient action of the cleaning substance. This may considerably delay the overall milking process of a herd, in particular if multiple animals are to be milked in succession.

### Summary

In view of the above, an objective of the present invention is to provide a milking system of the aforementioned type, ensuring thorough teat cleaning and also enabling a high throughput of animals, while avoiding any unnecessary loss of time.

This objective is achieved by a milking system according to claim 1 configured to milk dairy animals, the milking system comprising:
- at least one preparation station for automatically preparing at least one teat of a dairy animal before applying milking equipment, and
- at least one milking station in which one of the animals is milked at a time, wherein the preparation station is designed to receive at least one animal to be milked, and wherein the milking system has at least one teat cup designed to receive a teat of the dairy animal to be milked.

According to the invention, the preparation station has a dispensing means arranged to apply a pretreatment solution onto the at least one teat of the animal to be milked when it passes through the preparation station.

According to the invention, the teat cup by which the received teat is cleaned prior to the milking process is designed with a rinsing function, and4he* the rinsing function is provided to remove the pretreatment solution applied onto the teat at the preparation station from the teat in a rinsing process.

According to the present invention, the pretreatment solution applied at the preparation station is removed from the teat by means of the teat cup and its rinsing function. Thereby, an additional cleaning step at the preparation station, as intended in the prior art, can be avoided. Instead, rinsing of the teat to remove the pretreatment solution is performed directly with the teat cup which must be applied anyway.

According to the invention, the teat cup may be provided as a separate teat preparation cup for carrying out a teat rinse, and the separate teat preparation cup is provided at the milking station.

As an alternative to a separate teat preparation cup, it may be provided according to the invention that the teat cup is designed as a part of the milking station, wherein the teat cup is designed both to perform a teat rinse and to perform the actual milking process. In other words, the milking station may be provided with a teat preparation cup designed to perform a teat rinse and a pre-milking process and further teat cups of the milking equipment to perform the milking subsequent the teat rinse and the pre-milking process or the teat cup, used for milking later on, is also provided with a rinsing function such that, immediately prior to milking, the pretreatment solution can be removed from the teat by the rinsing function, the teat can be sufficiently rinsed and the milking process can then be performed with the teat cup already applied. The latter is particularly suitable when using a milking system having teat cups in which the teat rinsing function is implemented in addition to the milking function. Such teat cups with an integrated teat rinsing function are also offered by the applicant, among others.

The invention intends for the preparation station to have a teat preparation section with an access and an exit located remotely from the access, wherein the teat preparation section is provided with lateral boundary means between the access and the exit which are arranged for predetermined lateral positioning of the animal to be milked, wherein the pretreatment solution is applied to the teat when the animal to be milked is at its predetermined lateral positioning. According to the invention, an animal to be milked can be appropriately positioned in the teat preparation section by the lateral boundary means to apply the pretreatment solution. In particular, the teat preparation section with its lateral boundary means can be configured such that the pretreatment solution can be specifically applied onto the teats while an animal enters or passes through the teat preparation section.

An embodiment of the invention further intends for the dispensing means to be able to be arranged at a floor and comprise at least one nozzle designed to spray the pretreatment solution essentially vertically upwards to the at least one teat, preferably with a volume of the pretreatment solution of 15 to 20 ml. In this respect, it may also be intended that the dispensing means is designed with two nozzles which are arranged with a distance of about two pairs of teats in the longitudinal direction of the animal.

Preferably, it may also be intended that the dispensing means is designed such that the pretreatment solution is able to be applied onto the at least one teat as a foam. The application of the pretreatment solution in the form of a foam allows to efficiently apply it with a sufficiently good cleaning effect. Alternatively, it may be intended that the dispensing means is designed to apply the pretreatment solution onto the at least one teat as an aqueous solution in a diluted form, preferably with a mixing ratio of one part by volume of pretreatment solution and at least two parts by volume of water.

As already noted above, it is important that the pretreatment solution can act on the teat for a sufficient amount of time before it is rinsed off. In this respect, it may be intended that the preparation station is dimensioned such that, when the animal to be milked passes through the preparation station after application of the pretreatment solution, a sufficient amount of time for reliable disinfection passes prior to applying the teat cup with rinsing function, preferably at least 80 to 100 seconds after application of the pretreatment solution onto at least one teat of a front pair of teats and further preferably at least 50 to 60 seconds after application of the pretreatment solution onto at least one teat of a rear pair of teats.

With respect to a structural implementation, a further embodiment of the present invention intends for the dispensing means to be coupled to at least one of the boundary means via at least one connecting strut, preferably wherein the dispensing means is designed with at least one supply channel for feeding a pretreatment solution to the dispensing means.

In addition, it may be intended that the supply channel is associated with a pump providing a pressure high enough to spray the pretreatment solution towards the at least one teat. It should be ensured that the pressure at which the pretreatment solution is provided is high enough to reliably apply the pretreatment solution onto the teat, but not so high that the pretreatment solution is sprayed uncontrollably or too far from the preparation station.

According to the invention, the milking station comprises a rotary milking parlor. In an embodiment not according to the invention, the milking station comprises several milking areas arranged one after the other in a row or offset from each other.

### Brief description of drawings

The invention will now be described by way of examples with reference to the attached figures. Therein:
**Fig.** 1 shows a schematic top view of a milking system to illustrate the present invention;
**Fig.** 2 shows a detailed view of a preparation station according to the present invention;
**Fig. 3** shows a detailed view of a dispensing means for applying a pretreatment solution; and
**Fig.** 4 shows a detailed view of a teat cup with rinsing function.

### Detailed description

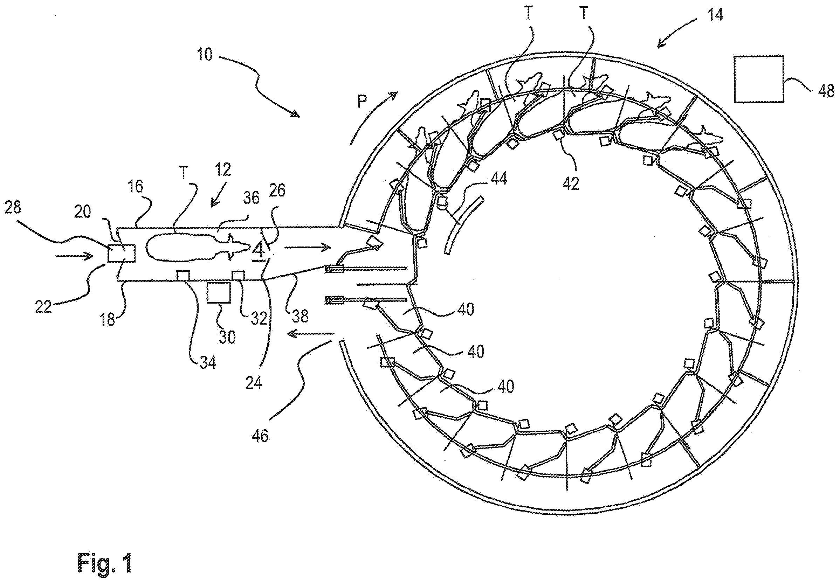

In **Fig.** 1, a milking system according to the present invention is schematically shown in a top view and generally denoted with **10.** It comprises a preparation station **12** which is arranged in the area in front of a milking station designed as a rotary milking parlor **14.**

It can be seen that lateral boundaries **16, 18** are provided at preparation station **12.** Preparation station **12** is accessible through an access **22** for an animal T, which is provided with a controllable gate **20.** Moreover, an exit **24** having a controllable gate **26** is provided at an end of preparation station **12.** In the area of access **22,** a dispensing means **28** is arranged at the bottom. Dispensing means **28** is operable to apply a pretreatment solution onto the teats from below for disinfection and cleaning of the individual teats of an animal T to be milked. For this purpose, a reservoir **30** for the pretreatment solution and a control device **32** for controlling the application of the pretreatment solution as well as a pump **34** are provided to convey the pretreatment solution to dispensing means **28** and spray it upwards therefrom.

Furthermore, an identification system for individual animals T and optionally analytical equipment may also be provided at the preparation station, which are not depicted or denoted in greater detail.

The layout of preparation station **12** with the two boundaries **16, 18** results in a passage **36** through which the animal to be milked passes. Preparation station **12** is followed by a route **38** leading the animal to be milked to rotary milking parlor **14.** Rotary milking parlor **14** comprises a series of radially arranged milking stalls **40** for receiving animals T.

Each individual milking stall **40** is provided with milking equipment **42** to which the individual teat cups (not shown in **Fig.** 1) are attached. These can be put on the teats of a given animal T to be milked by a robotic arm **44** while the animal is at a desired target position within the respective milking stall, as shown in **Fig.** 1. Rotary milking parlor **14** rotates together with the animals according to the arrow P in a clockwise direction at a preset or variable speed. During rotation, the individual animals T located at the milking stalls **40** are milked. After one turn, once the milking process is complete, the animals T are released into an exit section **46** from the respective milking stall **40.** A control device **48** is provided for controlling rotary milking parlor **14.**

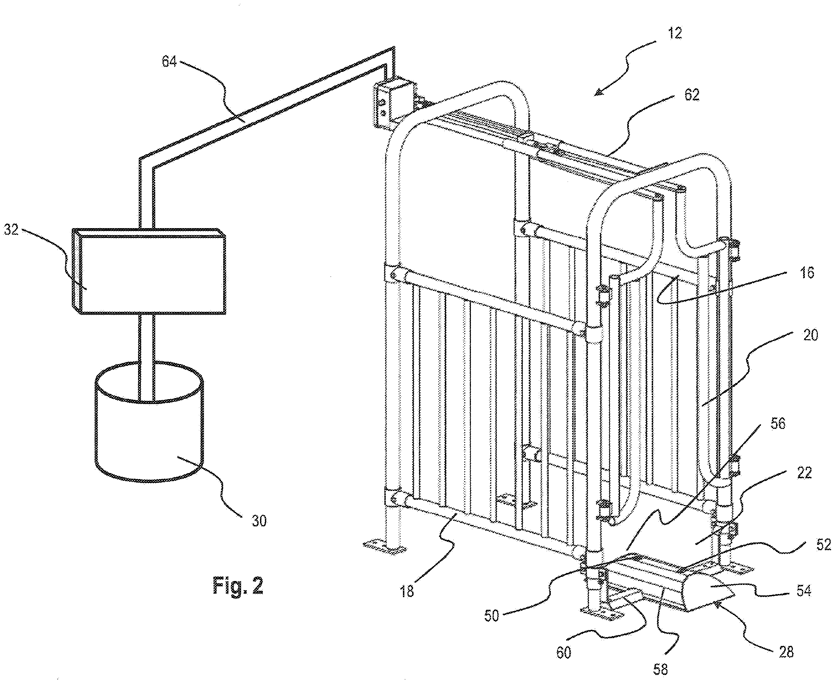

**Fig.** 2 shows a detailed view of a preparation station **12,** as already described with respect to **Fig.** 1. It can be seen that dispensing means **28** for the pretreatment solution is provided in access section **22.** It comprises two nozzles **50, 52** by which the pretreatment solution can be applied onto teats of an animal to be milked from below in the shape of a disc. The two nozzles **50, 52** are spaced from one another by about the usual distance of two pairs of teats of an udder. Dispensing means **28** is provided with sloping surfaces **54, 56** at the ends thereof to prevent animals from tripping, and has a profile **58** in the shape of a cylinder jacket which is resistant to trampling. It can also be seen that dispensing means **28** is connected to both barriers **16, 18** designed as a grid arrangement by a connecting strut **60.** In addition, gate **20** can be seen at access **22.** This gate **20** has a double-winged design and is operable by control rods **62** to selectively open it to allow an animal to enter preparation station **12,** and to then close it to prevent an animal from backing out of the preparation station or the next animal from moving up prematurely at an inappropriate time.

In **Fig.** 2, reservoir **30** for accommodating the pretreatment solution and control system **32** and a supply line **64** for feeding the pretreatment solution from the reservoir to dispensing means **28** can also be seen.

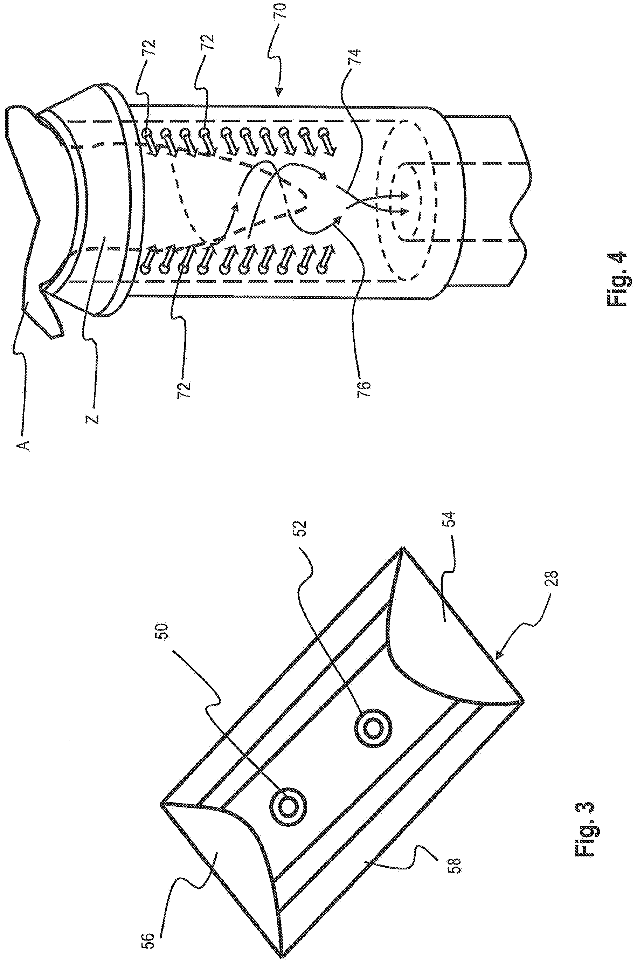

**Fig.** 3 shows a detailed view of the dispensing means with both nozzles **50, 52** which are of conical design, and with the sloping ends **54, 56** and the profile **58** in the shape of a cylinder jacket.

Finally, in **Fig.** 4, a teat cup **70** with a section A of an udder and a teat Z received in teat cup **70** can be seen. The teat cup 70 is here shown as a separate teat cup from the teat cups of the milking equipment 42 and the teat cup 70 is a separate teat preparation cup. In particular, one can also see here how a rinsing solution is introduced through provided openings **72** and the teat is thus rinsed and cleaned in accordance with the flow arrows **74, 76.** As such, the pretreatment solution applied by dispensing means **28** onto the teats can be removed from the teat completely during the rinsing process in teat cup **70.** On the whole, through the combination of applying the pretreatment solution, this pretreatment solution acting over a certain period of time and subsequently rinsing the teat to remove the pretreatment solution, a high udder hygiene and clean teats can be achieved to obtain a high milk quality.

The system according to the present invention is based on preparation station **12** applying a pretreatment solution onto the teats via dispensing means **28,** preferably in the form of a foam or as an aqueous solution, said pretreatment solution acting for as long as the animal needs to pass through preparation station **12** and reach the assigned milking stall **40.** Before the milking equipment **42** is applied to the teats by robotic arm **44** the respective teat is first rinsed with the aid of the separate teat preparation cup teat **70** that is applied to a respective teat by the robotic arm 44. As a result, teats Z are rinsed by the rinsing function of teat separation cup **70,** wherein the pretreatment solution is rinsed off together with possible contaminants on the teat. It is to be noted that there might be several separate teat preparation cups. This procedure ensures a sufficiently long time of exposure to the pretreatment solution for cleaning and disinfecting the teats without having to needlessly delay guiding individual animals to milking stalls **40.** In this way, times of exposure to the pretreatment solution can be achieved which lie between a few seconds and up to more than 2 minutes, wherein the time needed by the animal to pass through preparation station **12** and reach the assigned milking stall **40** is utilized for exposure to the pretreatment solution.

According to the invention, an efficient and time-saving cleaning of the individual teats is thus achieved before the milking process can be started.

It should be noted that teat cup **70** of the described embodiment of the invention may be used to merely provide the rinsing function, while separate different teat cups (not shown) may be used for the actual milking process which may be put on the teats later after removing teat cups **70.** Furthermore, teat cups **70** may also be designed such that they are first used to perform the rinsing process to remove the pretreatment solution and clean the teats, and then, after the rinsing process, a pre-milking process and/or the actual milking process is performed with one and the same teat cups.

One possible pretreatment solution is, for example, the DeLaval Biofoam^{®} product sold by the applicant, which is applied to the teats as a foam. Depending on the given application, different concentrations may be used, for example with a mixing ratio of 1:3 with 3 parts water.

## Claims

1. A milking system **(10)** configured to milk dairy animals, the milking system **(10)** comprising:
- at least one preparation station **(12)** for automatically preparing at least one teat (Z) of a dairy animal (T) before applying milking equipment **(42),** and
- at least one milking station (14) that comprises a rotary milking parlor with several milking stalls, each milking stall arranged to milk one of the animals (T) at a time,
wherein the preparation station **(12)** is designed to receive at least one animal (T) to be milked,
wherein the milking system **(10)** has at least one teat cup **(70)** designed to receive a teat (Z) of the dairy animal (T) to be milked,
wherein the preparation station **(12)** has a dispensing means **(28)** arranged to apply a pretreatment solution onto the at least one teat (Z) of the animal (T) to be milked when it passes through the preparation station **(12),**
the preparation station **(12)** has a teat preparation section with an access **(22)** and an exit **(24)** located remotely from the access **(22),** wherein the teat preparation section is provided with lateral boundary means **(16, 18)** between the access **(22)** and the exit **(24)** which are arranged for predetermined lateral positioning of the animal (T) to be milked, wherein the dispensing means (28) is arranged to apply the pretreatment solution onto the teat (Z) when the animal (T) to be milked is at its predetermined lateral positioning, **characterized in that**
the teat cup **(70)** is designed with a rinsing function by which the received teat (Z) is cleaned prior to the milking process,
and the rinsing function is provided to remove the pretreatment solution applied onto the teat (Z) at the preparation station **(12)** from the teat (Z) in a rinsing process, wherein the teat cup **(70)** is provided as a separate teat preparation cup for performing the rinsing function and is designed as a part of the milking station (14) or the teat cup **(70)** is designed as a part of the milking station **(14)** wherein the teat cup **(70)** is designed both for performing the rinsing function and for performing the milking process.

2. The milking system **(10)** as claimed in claim 1, **characterized in that** the dispensing means **(28)** is able to be arranged at a floor and comprises at least one nozzle **(50, 52)** designed to spray the pretreatment solution essentially vertically upwards to the at least one teat (Z), preferably with a volume of the pretreatment solution of 15 to 20 ml.

3. The milking system **(10)** as claimed in any one of the preceding claims, **characterized in that** the dispensing means **(28)** is designed with two nozzles **(50, 52)** which are arranged with a distance of about two pairs of teats in the longitudinal direction of the animal (T).

4. The milking system **(10)** as claimed in any one of the preceding claims, **characterized in that** the dispensing means **(28)** is designed such that the pretreatment solution is able to be applied onto the at least one teat (Z) as a foam.

5. The milking system **(10)** as claimed in any one of the preceding claims, **characterized in that** the dispensing means **(28)** is designed to apply the pretreatment solution onto the at least one teat (Z) as an aqueous solution in a diluted form, preferably with a mixing ratio of one part volume of pretreatment solution and at least two parts volume of water.

6. The milking system **(10)** as claimed in any one of the preceding claims, **characterized in that** the preparation station **(12)** is dimensioned such that, when the animal (T) to be milked passes through the preparation station **(12)** after application of the pretreatment solution, a sufficient amount of time for reliable disinfection passes prior to applying the teat cup **(70)** with rinsing function, preferably at least 80 to 100 seconds after application of the pretreatment solution onto at least one teat (Z) of a front pair of teats and further preferably at least 50 to 60 seconds after application of the pretreatment solution onto at least one teat (Z) of a rear pair of teats.

7. The milking system **(10)** as claimed in any one of the preceding claims, **characterized in that** the dispensing means **(28)** is coupled to at least one of the boundary means **(16, 18)** via at least one connecting strut **(60),** preferably wherein the dispensing means **(28)** is designed with at least one supply channel **(64)** for feeding a pretreatment solution to the dispensing means **(28).**

8. The milking system **(10)** as claimed in claim 7, **characterized in that** the supply channel **(64)** is associated with a pump **(34)** providing a pressure high enough to spray the pretreatment solution towards the at least one teat (Z).

## Patentansprüche

1. Melksystem **(10),** das konfiguriert ist, um Milchtiere zu melken, das Melksystem **(10)** umfassend:
- mindestens eine Vorbereitungsstation **(12)** zum automatischen Vorbereiten mindestens einer Zitze (Z) eines Milchtiers (T) vor einem Applizieren von Melkausrüstung **(42)** und
- mindestens eine Melkstation (14), die einen Karussellmelkstand mit mehreren Melkställen umfasst, wobei jeder Melkstall angeordnet ist, um jeweils eines der Tiere (T) zu melken, wobei die Vorbereitungsstation **(12)** gestaltet ist, um mindestens ein zu melkendes Tier (T) aufzunehmen,
wobei das Melksystem **(10)** mindestens einen Zitzenbecher **(70)** aufweist, der gestaltet ist, um eine Zitze (Z) des zu melkendes Milchtiers (T) aufzunehmen,
wobei die Vorbereitungsstation **(12)** ein Abgabemittel **(28)** aufweist, das angeordnet ist, um eine Vorbehandlungslösung auf die mindestens eine Zitze (Z) des zu melkenden Tiers (T) zu applizieren, wenn es die Vorbereitungsstation **(12)** durchgeht,
wobei die Vorbereitungsstation **(12)** einen Zitzenvorbereitungsabschnitt mit einem Zugang **(22)** und einem Ausgang **(24),** der von dem Zugang **(22)** entfernt gelegen ist, aufweist, wobei der Zitzenvorbereitungsabschnitt mit seitlichen Begrenzungsmitteln **(16, 18)** zwischen dem Zugang **(22)** und dem Ausgang **(24),** die für eine zuvor bestimmte seitliche Positionierung des zu melkenden Tiers (T) angeordnet sind, versehen ist, wobei das Abgabemittel (28) angeordnet ist, um die Vorbehandlungslösung auf die Zitze (Z) zu applizieren, wenn sich das zu melkende Tier (T) an seiner zuvor bestimmten seitlichen Positionierung befindet, **dadurch gekennzeichnet, dass**
der Zitzenbecher **(70)** mit einer Spülfunktion, mittels der die aufgenommene Zitze (Z) vor dem Melkverfahren gereinigt wird, gestaltet ist,
und die Spülfunktion bereitgestellt ist, um die Vorbehandlungslösung, die auf die Zitze (Z) appliziert wird, an der Vorbereitungsstation **(12)** von der Zitze (Z) in einem Spülverfahren zu entfernen, wobei der Zitzenbecher **(70)** als ein separater Zitzenvorbereitungsbecher zum Durchführen der Spülfunktion bereitgestellt ist und als ein Teil der Melkstation (14) gestaltet ist oder der Zitzenbecher **(70)** als ein Teil der Melkstation **(14)** gestaltet ist, wobei der Zitzenbecher **(70)** sowohl für das Durchführen der Spülfunktion als auch für das Durchführen des Melkverfahrens gestaltet ist.

2. Melksystem **(10)** nach Anspruch 1, **dadurch gekennzeichnet, dass** das Abgabemittel **(28)** an einem Boden angeordnet sein kann und mindestens eine Düse **(50, 52)** umfasst, die gestaltet ist, um die Vorbehandlungslösung im Wesentlichen vertikal nach oben zu der mindestens einen Zitze (Z), vorzugsweise mit einem Volumen der Vorbehandlungslösung von 15 bis 20 ml, zu sprühen.

3. Melksystem **(10)** nach einem der vorstehenden Ansprüche,
**dadurch gekennzeichnet, dass** das Abgabemittel **(28)** mit zwei Düsen **(50, 52)** gestaltet ist, die mit einem Abstand von etwa zwei Paaren von Zitzen in der Längsrichtung des Tiers (T) angeordnet sind.

4. Melksystem **(10)** nach einem der vorstehenden Ansprüche,
**dadurch gekennzeichnet, dass** das Abgabemittel **(28)** derart gestaltet ist, dass die Vorbehandlungslösung als ein Schaum auf die mindestens eine Zitze (Z) appliziert werden kann.

5. Melksystem **(10)** nach einem der vorstehenden Ansprüche,
**dadurch gekennzeichnet, dass** das Abgabemittel **(28)** gestaltet ist, um die Vorbehandlungslösung als eine wässrige Lösung in einer verdünnten Form, vorzugsweise mit einem Mischungsverhältnis von einem Teilvolumen Vorbehandlungslösung und mindestens zwei Teilevolumen Wasser, auf die mindestens eine Zitze (Z) zu applizieren.

6. Melksystem **(10)** nach einem der vorstehenden Ansprüche,
**dadurch gekennzeichnet, dass** die Vorbereitungsstation **(12)** derart dimensioniert ist, dass, wenn das zu melkende Tier (T) die Vorbereitungsstation **(12)** nach einer Applikation der Vorbehandlungslösung durchgeht, ein ausreichender Zeitumfang für eine zuverlässige Desinfektion vor dem Applizieren des Zitzenbechers **(70)** mit Spülfunktion, vorzugsweise mindestens 80 bis 100 Sekunden nach der Applikation der Vorbehandlungslösung auf mindestens eine Zitze (Z) eines vorderen Paars von Zitzen und ferner vorzugsweise mindestens 50 bis 60 Sekunden nach der Applikation der Vorbehandlungslösung auf mindestens eine Zitze (Z) eines hinteren Paars von Zitzen, vergeht.

7. Melksystem **(10)** nach einem der vorstehenden Ansprüche,
**dadurch gekennzeichnet, dass** das Abgabemittel **(28)** mit mindestens einem der Begrenzungsmittel **(16, 18)** über mindestens eine Verbindungsstrebe **(60)** gekoppelt ist, vorzugsweise wobei das Abgabemittel **(28)** mit mindestens einem Versorgungskanal **(64)** zum Zuführen einer Vorbehandlungslösung zu dem Abgabemittel **(28)** gestaltet ist.

8. Melksystem **(10)** nach Anspruch 7, **dadurch gekennzeichnet, dass** der Versorgungskanal **(64)** mit einer Pumpe **(34)** verknüpft ist, die einen Druck bereitstellt, der hoch genug ist, um die Vorbehandlungslösung zu der mindestens einen Zitze (Z) hin zu sprühen.

## Revendications

1. Système de traite (10) configuré pour traire des animaux laitiers, le système de traite (10) comprenant :
- au moins un poste de préparation (12) pour préparer automatiquement au moins un trayon (Z) d'un animal laitier (T) avant l'application d'un équipement de traite (42), et
- au moins un poste de traite (14) qui comprend une salle de traite rotative dotée de plusieurs stalles de traite, chaque stalle de traite étant agencée pour traire un des animaux (T) à la fois, dans lequel le poste de préparation (12) est conçu pour recevoir au moins un animal (T) à traire,
dans lequel le système de traite (10) dispose d'au moins un gobelet trayeur (70) conçu pour recevoir un trayon (Z) de l'animal laitier (T) à traire,
dans lequel le poste de préparation (12) dispose d'un moyen de distribution (28) agencé pour appliquer une solution de prétraitement sur l'au moins un trayon (Z) de l'animal (T) à traire lorsqu'il traverse le poste de préparation (12),
le poste de préparation (12) dispose d'une section de préparation de trayon avec une entrée (22) et une sortie (24) située à distance de l'entrée (22), dans lequel la section de préparation de trayon est pourvue de moyens de délimitation latérale (16, 18) entre l'entrée (22) et la sortie (24), lesquels moyens de délimitation sont agencés pour un positionnement latéral prédéterminé de l'animal (T) à traire, dans lequel le moyen de distribution (28) est agencé pour appliquer la solution de prétraitement sur le trayon (Z) lorsque l'animal (T) à traire se trouve à son positionnement latéral prédéterminé, **caractérisé en ce que**
le gobelet trayeur (70) est conçu avec une fonction de rinçage par laquelle le trayon (Z) reçu est nettoyée avant le processus de traite,
et la fonction de rinçage est prévue pour éliminer du trayon (Z) la solution de prétraitement appliquée sur le trayon (Z) au niveau du poste de préparation (12) dans un processus de rinçage, dans lequel le gobelet trayeur (70) est prévu en tant que gobelet distinct de préparation de trayon pour la réalisation de la fonction de rinçage et est conçu en tant que partie du poste de traite (14), ou le gobelet trayeur (70) est conçu en tant que partie du poste de traite (14), dans lequel le gobelet trayeur (70) est conçu à la fois pour effectuer la fonction de rinçage et pour effectuer le processus de traite.

2. Système de traite (10) selon la revendication 1, **caractérisé en ce que** le moyen de distribution (28) peut être agencé au niveau d'un plancher et comprend au moins une buse (50, 52) conçue pour pulvériser la solution de prétraitement sensiblement verticalement vers le haut sur l'au moins un trayon (Z), de préférence avec un volume de la solution de prétraitement de 15 à 20 ml.

3. Système de traite (10) selon l'une quelconque des revendications précédentes, **caractérisé en ce que** le moyen de distribution (28) est conçu avec deux buses (50, 52) qui sont agencées à une distance d'environ deux paires de trayons dans la direction longitudinale de l'animal (T).

4. Système de traite (10) selon l'une quelconque des revendications précédentes, **caractérisé en ce que** le moyen de distribution (28) est conçu de telle sorte que la solution de prétraitement puisse être appliquée sur l'au moins un trayon (Z) sous forme de mousse.

5. Système de traite (10) selon l'une quelconque des revendications précédentes, **caractérisé en ce que** le moyen de distribution (28) est conçu pour appliquer la solution de prétraitement sur l'au moins un trayon (Z) en tant que solution aqueuse sous une forme diluée, de préférence avec un rapport de mélange d'une part de volume de solution de prétraitement et d'au moins deux parts de volume d'eau.

6. Système de traite (10) selon l'une quelconque des revendications précédentes, **caractérisé en ce que** le poste de préparation (12) est dimensionné de telle sorte que, lorsque l'animal (T) à traire traverse le poste de préparation (12) après l'application de la solution de prétraitement, une durée suffisante pour une désinfection fiable s'écoule avant l'application du gobelet trayeur (70) avec fonction de rinçage, de préférence au moins 80 à 100 secondes après l'application de la solution de prétraitement sur au moins un trayon (Z) d'une paire avant de trayons et plus préférablement d'au moins 50 à 60 secondes après l'application de la solution de prétraitement sur au moins un trayon (Z) d'une paire arrière de trayons.

7. Système de traite (10) selon l'une quelconque des revendications précédentes, **caractérisé en ce que** le moyen de distribution (28) est accouplé à au moins l'un des moyens de délimitation (16, 18) par l'intermédiaire d'au moins une entretoise de raccordement (60), de préférence dans lequel le moyen de distribution (28) est conçu avec au moins un canal d'alimentation (64) pour alimenter le moyen de distribution (28) avec une solution de prétraitement.

8. Système de traite (10) selon la revendication 7, **caractérisé en ce que** le canal d'alimentation (64) est associé à une pompe (34) fournissant une pression suffisamment élevée pour pulvériser la solution de prétraitement vers l'au moins un trayon (Z).
